# EUROPÄISCHE PATENTSCHRIFT

(11) **EP 1 226 478 B1**
(45) Veröffentlichungstag und Bekanntmachung des Hinweises auf die Patenterteilung: **27.04.2005**
(21) Anmeldenummer: 00990594.4
(22) Anmeldetag: 03.11.2000
(51) Int. Cl.: G05D 16/20

(54) **VENTIL, INSBESONDERE DRUCKREGELVENTIL**
VALVE, ESPECIALLY A PRESSURE CONTROL VALVE
SOUPAPE, NOTAMMENT SOUPAPE DE REGULATION DE PRESSION

(30) Priorität: 05.11.1999 DE 19953209
(43) Veröffentlichungstag der Anmeldung: 31.07.2002
(73) Patentinhaber: Hydac Fluidtechnik GmbH, 66273 Sulzbach/Saar (DE)
(72) Erfinder: BRUCK, Peter, 66484 Althombach (DE); HILLESHEIM, Thorsten, 66119 Saarbrücken (DE)
(74) Vertreter: Patentanwälte Bartels und Partner
(86) Internationale Anmeldenummer: PCT/EP2000/010844
(87) Internationale Veröffentlichungsnummer: WO 2001/033307

(56) Entgegenhaltungen:
- DE-A- 3 144 362
- DE-A- 4 115 594
- US-A- 4 316 599
- US-A- 5 174 338
- US-A- 5 894 860

## Beschreibung

Die Erfindung betrifft ein Ventil, insbesondere Druckregelventil, mit einem Ventilgehäuse mit mindestens einem Pumpen-, Nutz- und Tankanschluß, wobei in dem Ventilgehäuse ein von einem Magnetanker ansteuerbarer Ventilkolben geführt ist gemäß den Merkmalen des Oberbegriffes des Patentanspruches 1.

Bekannt sind Proportional-Druckregelventile, die unter anderem Steuerventile für ölhydraulische Anlagen bilden, die bei veränderlichem Eingangsdruck im wesentlichen einen konstanten Ausgangsdruck liefern. Der zu steuernde Ausgangsdruck wird durch das Stromsignal vorgegeben, das von einer entsprechenden Ansteuerelektronik geliefert wird und auf einen Betätigungsmagneten wirkt. Der Betätigungsmagnet kann als druckdichter Ölbadmagnet ausgeführt sein und weist eine lange Lebensdauer auf.

Dahingehende Proportional-Druckregelventile können direktgesteuerte Kolbenschieberventile in Drei-Wege-Ausführung sein, d. h. mit ausgangsseitiger Druckabsicherung. Sie werden unter anderem in ölhydraulischen Anlagen zur Steuerung von Kupplungen, in Schaltgetrieben, zur gezielten Beeinflussung von Druckaufbau und Druckabbau, zur Druckfernverstellung, aber auch zur Steuerung von Druckverläufen und zur Vorsteuerung von Hydroventilen und Logikelementen eingesetzt.

Dahingehende herkömmliche Proportional-Druckregelventile weisen insbesondere bei dünnflüssigen Fluidmedien eine schlechte Stabilität auf, d.h. sie beginnen zu schwingen, was insbesondere schädlich ist, wenn die bekannten Ventile Sonderfunktionen erfüllen sollen, beispielsweise in Kraftfahrzeug-Servolenkungen, sicherheitstechnisch relevanten Bereichen od.dgl.. Es hat sich allgemein gezeigt, daß bei der Anwendung von Druckregelventilen die Anfälligkeit für Störgrößen im Eigenfrequenzbereich des Ventiles liegt, wobei die auftretenden Instabilitäten bis zum Funktionsausfall des Ventils und der zugehörigen Anlagenteile führen können.

Durch die US-A-4 316 599 ist ein gattungsgemäßes Ventil bekannt, mit einem Ventilgehäuse mit mindestens einem Pumpen-, Nutz- und Tankanschluß, wobei in dem Ventilgehäuse ein von einem Magnet ansteuerbarer Ventilkolben geführt ist, und wobei das Ventil mit einer hydraulischen Dämpfungseinrichtung versehen ist, die einen Dämpfungsraum aufweist, der über eine Drossel mit Drosselstelle fluidführend mit dem Nutzanschluß verbunden ist, und über eine Verbindungsleitung in Abhängigkeit von der Stellung des Ventilkolbens wahlweise der Pumpen- oder der Tankanschluß mit dem Nutzanschluß verbunden ist. Bei der bekannten Lösung wird bei einer Auslenkung des Ventilkolbens in Richtung der Drossel bedingt durch die Magnetkraft des Schaltmagneten das im Dämpfungsraum bevorratete Fluid über die Drossel in Richtung des Nutzanschlusses verdrängt, wobei der Verdrängungsvolumenstrom über die Drossel einen örtlichen Druckaufbau erzeugt. Auf die druckwirksame Fläche, die die Drosselstelle begrenzt, läßt sich eine Kraft ermitteln, die entgegen der auslenkenden Kraft des Ventilkolbens gerichtet ist, und so eine dämpfende Wirkung auf den gesamten Ventilkolben ausübt. Beim Zurückfahren des Ventilkolbens in die umgekehrte Richtung, muss dieses Fluidvolumen vom Nutzanschluß kommend, in den nun sich vergrößernden Dämpfungsraum wieder über die definierte Drossel zurückströmen, was gleichfalls zu einer Dämpfung der auftretenden Schwingung führt. Die bekannte Lösung baut jedoch kompliziert auf, und ist somit teuer in der Herstellung und die erreichbaren Dämpfungsergebnisse sind noch nicht abschließend zufriedenstellend.

Durch die DE-A-31 44 362 ist ein elektromagnetisch betätigbares Stellglied bekannt, das einen scheibenförmigen Anker aufweist, welcher mit einem Steuerschieber in Wirkverbindung steht. Der Anker befindet sich im Gehäuse des Elektromagneten, welches über eine mit dem Rücklauf in Verbindung stehende Bohrung mit dem Druckmittel gefüllt ist. Diese stammt von einer Druckmittelquelle, welche nach Stellung des Steuerschiebers eine Verbindung zum Verbraucher bzw. zum Rücklauf herstellt. Dadurch, daß der Innenraum des Gehäuses bei der bekannten Lösung mit Druckmittel gefüllt ist, und der Anker gegenüber dem Gehäuseinnenraum einen Ringspalt in der Art einer Drossel bildet, können am Steuerschieber auftretende Schwingungen sofort gedämpft werden. Auch bei der dahingehend bekannten Lösung sind die Dämpfungsergebnisse nicht zufriedenstellend, und insoweit verbesserungsfähig.

Ausgehend von diesem Stand der Technik liegt daher der Erfindung die Aufgabe zugrunde, die bekannten Ventile dahingehend weiter zu verbessern, daß sie in ihrem Verhalten stabiler sind, insbesondere gegenüber Dauerschwingungen, so daß sie auch für Sondereinsatzfälle gut geeignet sind. Eine dahingehende Aufgabe löst ein Ventil mit den Merkmalen des Patentanspruches 1 in seiner Gesamtheit.

Dadurch, daß gemäß dem kennzeichnenden Teil des Patentanspruches 1 die Drosselstelle zumindest teilweise aus einem Ringspalt gebildet ist, der zwischen einer Ringscheibe und Teilen des die Ringscheibe umgebenden Ventilgehäuses gebildet ist, daß die Ringscheibe punktweise mit dem Ventilgehäuse verbördelt ist und daß an den Verbindungspunkten der Ringspalt unterbrochen ist ebenso wie durch die stirnseitige Anlage der Ringscheibe an dem Inneren des Ventilgehäuses wird bei einer Auslenkung des Ventilkolbens in Richtung der Drossel, bedingt durch die Magnetkraft des Schaltmagneten das im Dämpfungsraum bevorratete Fluid über die Drossel in Richtung des Nutzanschlusses verdrängt, wobei der Verdrängungsvolumenstrom über die Drossel einen örtlichen Druckaufbau erzeugt. Auf die druckwirksame Fläche, die die Drosselstelle begrenzt, läßt sich eine Kraft ermitteln, die entgegen der auslenkenden Kraft des Ventilkolbens gerichtet ist und so eine dämpfende Wirkung auf den gesamten Ventilkolben ausübt. Beim Zurückfahren des Ventilkolbens in die umgekehrte Richtung muss dieses Fluidvolumen vom Nutzanschluß kommend in den sich nun vergrößernden Dämpfungsraum wieder über die definierte Drossel zurückströmen, was gleichfalls zu einer Dämpfung der auftretenden Schwingungen führt.

Die erfindungsgemäße Lösung führt zu verbesserten Dämpfungsergebnissen und die dahingehende Lösung läßt sich kostengünstig in der Fertigung realisieren.

Dabei ist ferner vorzugsweise vorgesehen, daß der Ringspalt in einen Verbindungskanal der Ringscheibe mündet die fluidführend mit dem Dämpfungsraum in Verbindung steht.

Bei einer weiteren besonders bevorzugten Ausführungsform des erfindungsgemäßen Ventils verläuft die Verbindungsleitung zumindest teilweise parallel zur Verfahrrichtung des Ventilkolbens innerhalb des Ventilgehäuses, wobei über eine Ringausnehmung im Ventilkolben dieser wahlweise die Verbindung mit dem Tank oder dem Pumpenanschluß herstellt. Aufgrund der angesprochenen Verbindungsleitung ist der eigentliche Funktionsteil des Ventils vom Dämpfungsteil getrennt und dadurch die Funktionssicherheit der Ventilkonstruktion erhöht:

Weitere vorteilhafte Ausführungsformen sind Gegenstand der sonstigen Unteransprüche.

Im folgenden wird das erfindungsgemäße Ventil anhand einer Ausführungsform nach der Zeichnung näher erläutert.
Es zeigen in prinzipieller und nicht maßstäblicher Darstellung die
- Fig.1: teilweise in Ansicht, teilweise im Schnitt eine Längsdarstellung durch ein bekanntes Proportional-Druckregelventil;
- Fig.2: teilweise in Ansicht, teilweise im Schnitt eine Längsdarstellung des erfindungsgemäßen Ventils;
- Fig.3: eine stirnseitige Ansicht auf die Drossel;
- Fig.4: eine Seitenansicht auf die Drossel nach der Fig.3.

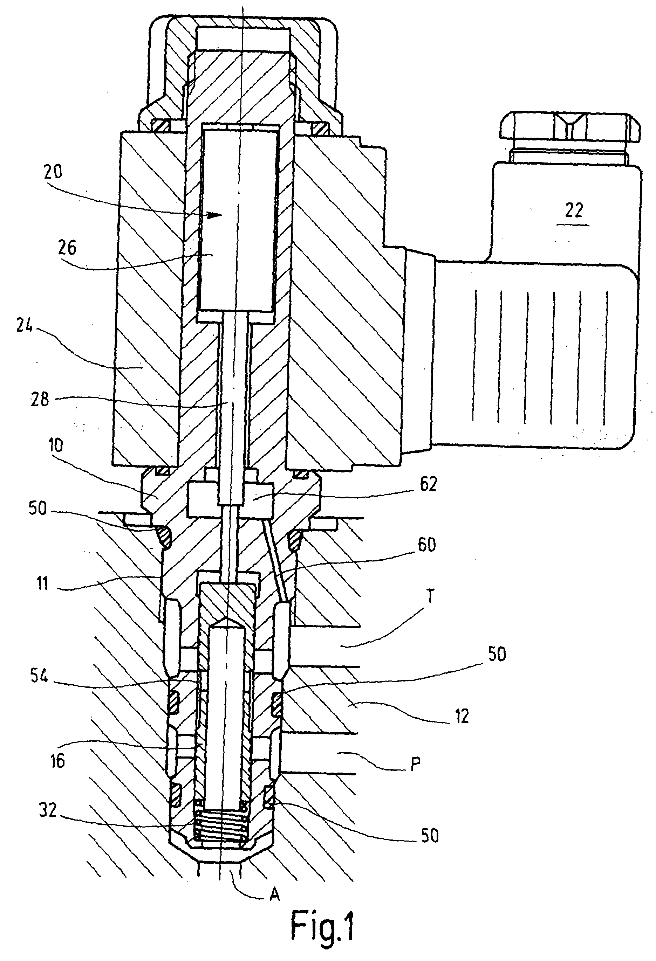

Um das erfindungsgemäße Ventil besser zu verstehen, wird zunächst anhand der Fig.1 ein bekanntes Proportional-Druckregelventil, wie es frei auf dem Markt erhältlich ist, näher erläutert.

Das in der Fig.1 gezeigte Ventil zum Stand der Technik besteht aus einem Ventilgehäuse 10 in der Art einer Einschraubpatrone, was man in der Fachsprache auch als Cartridge-Ventil bezeichnet, so daß sich das bekannte Ventil über ein Außengewinde 11 in eine Ventilaufnahme 12 mit den Fluidanschlüssen P, T und A einschrauben läßt, wobei A der Nutzanschluß, P der Pumpenanschluß und T der Tankanschluß ist. Der im Inneren des Ventilgehäuses 10 längsverfahrbare Haupt- oder Ventilkolben 16 ist entsprechend gehärtet und geschliffen ausgebildet. Zu seiner elektrischen Betätigung ist ein als Ganzes mit 20 bezeichnetes Magnetsystem vorhanden mit einer Leitungsdose 22 und einem innerhalb einer Magnetspule 24 geführten und betätigbaren Magnetanker 26. Der Magnetanker 26 ist über ein stößelartiges Betätigungsteil 28 mit dem Ventilkolben 16 verbunden, der sich an seinem vorderen Ende an einer Rückstell- oder Druckfeder 32 abstützt, und zwar im Bereich des Nutzanschlusses A, wobei die Druckfeder 32 mit ihrem anderen freien Ende in Anlage mit einer stirnseitigen Innenausnehmung des Ventilkörpers 10 ist.

In der Ausgangsstellung, bei der kein Strom fließt und der Magnetanker 26 somit nicht betätigt wird, ist das Ventil eingangsseitig am Pumpenanschluß P geschlossen und ausgangsseitig am Anschluß A mit dem Tankanschluß T fluidführend verbunden. Hierfür weist der Ventilkolben 16 außenumfangsseitig über eine vorgegebene Wegstrecke eine Ringausnehmung 54 auf. Wird nun ein Stromsignal über die Leitungsdose 22 an das Magnetsystem 20 angelegt, so drückt der Magnetanker 26 mit der einer der Höhe des Steuerstromes entsprechenden Kraft auf den.Ventilkolben 16. Dadurch wird der Regelkolben 16 gegen die Rückstellfeder 32 nach unten geschoben und das Fluid oder Öl strömt vom Pumpenanschluß P zum Nutzanschluß A. Ist an den Nutzanschluß A ein Verbraucher angeschlossen, beispielsweise in Form eines hydraulischen Zylinders oder dergleichen, baut sich am Nutzanschluß A ein Druck auf, der auf die Regelkolbenfläche wirkt und eine Gegenkraft zur Magnetkraft des Magnetsystems 20 erzeugt, welche den Ventil- oder Regelkolben 16 wieder nach oben bewegt. Dadurch wird der Zufluß des Pumpenanschlusses P zum Nutzanschluß A verringert, bis der am Nutzanschluß A anliegende Druck der Magnetkraft und damit die Druckwert-Vorgabe über das Stromsignal sich einander entsprechen. Benötigt der Verbraucher keine Druckflüssigkeit mehr, beispielsweise weil der hydraulische Zylinder seinen Hubanschlag erreicht hat, so bewegt sich der Ventilkolben 16 weiter nach oben und verschließt den Pumpenanschluß P. Fällt der Ausgangsdruck durch Entlastung des Verbrauchers unter die Druckvorgabe, so drückt der Magnetanker 26 den Ventilkolben 16 wieder nach unten und der Regelvorgang kann erneut beginnen. Der maximal erreichbare Ausgangsdruck wird dabei durch die Magnetkraft, die man auch als Druckstufe bezeichnet, festgelegt.

Eine mögliche Ausgangsdruckabsicherung an dem direkt gesteuerten Kolbenschieberventil von Nutzanschluß A zu Tankanschluß T geschieht dabei wie folgt. Steigt der Druck am Nutzanschluß A über den Vorgabedruck an, wird der Ventilkolben mit dem Magnetanker 26 nach oben verschoben und die Verbindung von Nutzanschluß A zum Tankanschluß T geöffnet. Dadurch wird der Druck am Nutzanschluß A begrenzt. Im Falle einer Unterbrechung des Steuerstromes wird der Ventilkolben 16 vom Druck am Anschluß A und der Rückstellfeder 32 nach oben verschoben. Dadurch wird wiederum der Nutzanschluß A mit dem Tankanschluß T verbunden und der Druck am Nutzanschluß A fällt auf das Tankdruckniveau ab.

Das dahingehende Proportional-Druckregelventil hat eine schlechte Stabilität, insbesondere bei Einsatz dünnflüssiger Medien, und grundsätzlich sind schädliche Schwingungen des Ventils um den Bereich des Ventilsitzes 14 herum möglich.

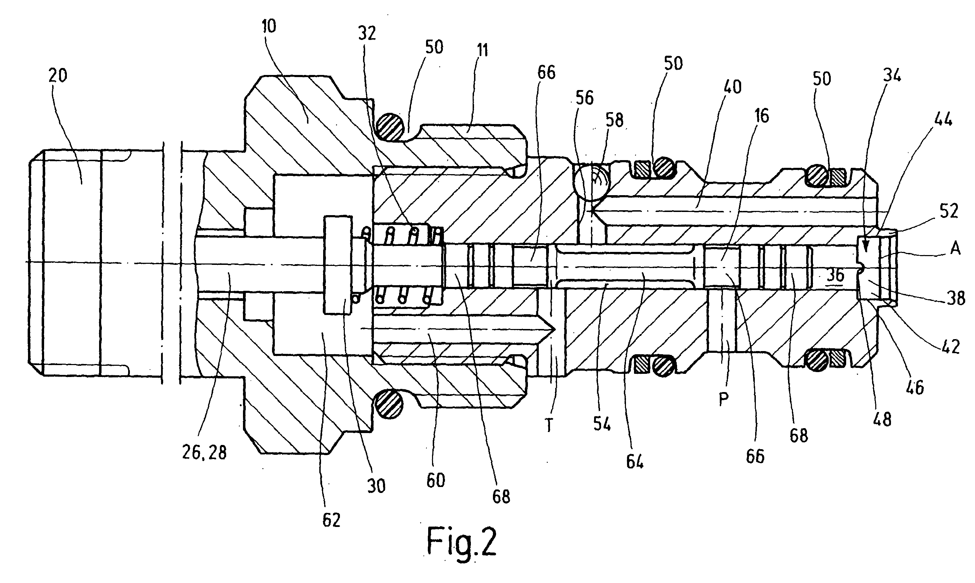

Um diesem schädlichen Schwingungsverhalten entgegenzuwirken, weist, wie dies anhand der Fig.2 bis 4 noch gezeigt werden wird, das erfindungsgemäße Ventil eine als Ganzes mit 34 bezeichnete hydraulische Dämpfungseinrichtung auf. Sofern die bekannten beschriebenen Ventilelemente auch bei dem erfindungsgemäßen Ventil Anwendung finden, werden diese mit denselben Bezugszeichen bezeichnet, wobei insofern das Gesagte auch für die erfindungsgemäße Ausführungsform gilt, so daß letztere nur insofern erläutert wird, als sie sich erfindungsgemäß von dem vorbeschriebenen Stand der Technik abhebt.

Die Dämpfungseinrichtung 34 ist mit einem Dämpfungsraum 36 versehen, der über eine Drossel 38 fluidführend mit dem Nutzanschluß A verbunden ist und mit Fluid befüllt ist. Über eine Verbindungsleitung 40 ist in Abhängigkeit von der Stellung des Ventilkolbens 16 wahlweise der Pumpenanschluß P oder der Tankanschluß T mit dem Nutzanschluß A verbunden. Bei der in der Fig.2 gezeigten Schaltstellung ist der Pumpenanschluß P vom Nutzanschluß A getrennt, letzterer jedoch zumindest teilweise über den Ventilkolben 16 an den Tankanschluß T angeschlossen.

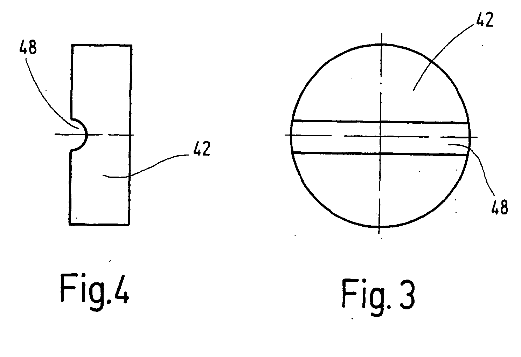

Die angesprochene Drossel 38 ist aus einer Ringscheibe 42 gebildet, wie sie näher in den Fig.3 und 4 dargestellt ist, wobei die Ringscheibe 42 über eine Drosselstelle 44 den Fluiddurchfluß zwischen Dämpfungsraum 36 und Nutzanschluß A in beiden Fluidrichtungen hemmt. Die Drosselstelle 44 entsteht dadurch, daß die Ringscheibe 42 gegenüber der Aufnahmebohrung 46 im Ventilgehäuse 10 ein Spiel von ca. 55 bis 70 µm aufweist. Ansonsten ist die Ringscheibe 42 gegenüber dem Nutzanschluß A geschlossen ausgeführt. Aus fertigungstechnischen Gründen ist das Herstellen der Passung zwischen Ringscheibe 42 und Aufnahmebohrung 46 des Ventilkörpers 10 einfach zu realisieren und mithin kostengünstig.

Wie insbesondere die Fig.3 und 4 zeigen, weist die Ringscheibe 42 auf ihrer dem Dämpfungsraum 36 zugewandten Seite einen rinnenartigen Verbindungskanal 48 auf. Der Verbindungskanal 48 kann kostengünstig dadurch gefertigt werden, daß man beim Herstellen der Ringscheibe 42 vor dem Abstechen des dahingehenden Drehbauteils eine Durchgangsbohrung fertigt, die dann später den halbkreisförmigen Ringkanal als Verbindungskanal 48 ausbildet. Der Verbindungskanal 48 mündet beidseitig der Ringscheibe 42 nach außen. Zur Verwendung des gezeigten Ventils gemäß der Fig.2 in eine dahingehend nicht näher dargestellte Ventilaufnahme 12 sind außenumfangsseitig am Ventilkörper 10 Ausnehmungen 50 angeordnet, in die in üblicher und nicht näher beschriebener Weise Dichtmittel, insbesondere Dichtringe, eingreifen und für eine Abdichtung des Ventilinneren gegenüber der Umgebung sorgen.

Die Ringscheibe 42 ist punktweise mit dem Ventilgehäuse 10 verbördelt, wobei an den Verbindungspunkten (nicht näher dargestellt) der fluidführende Ringspalt unterbrochen ist ebenso wie durch die stirnseitige Anlage der Ringscheibe 42 an dem Inneren des Ventilgehäuses 10 in Form der Aufnahmebohrung 46. Für eine sichere Verbördelung und einen sicheren Halt der Ringscheibe 42 innerhalb des Ventilgehäuses 10 ist im Abstand von jeweils 90° ein Bördelpunkt vorgesehen, d.h. an dieser Stelle verengt sich die Aufnahmebohrung 46 punktweise und die zylindrische Ventilaufnahme 52, die am freien Ende des Ventils dem Nutzanschluß oder Verbraucheranschluß A zugewandt ist, verjüngt sich entsprechend in diesen Punkten. Bis auf die Stelle der vier Anlagepunkte ist jedoch der Fluiddurchfluß zwischen dem Nutzanschluß A und dem Dämpfungsraum 36 nicht behindert. Da die Ringscheibe 42 stirnseitig am Ventilgehäuse anliegt, findet die weitere Fluidführung in den Dämpfungsraum 36 über den Verbindungskanal 48 statt, der zum einen in den Dämpfungsraum 36 mündet und zum anderen fluidführend über seine stirnseitigen Enden mit dem drosselnden Ringspalt in Verbindung steht.

Wie die Fig.2 des weiteren zeigt, ist die Verbindungsleitung 40 zumindest teilweise parallel zur Verfahrrichtung des Ventilkolbens 16 innerhalb des Ventilgehäuses 10 verlaufend angeordnet, wobei über die Ringausnehmung 54, die den Ventilkolben 16 radial umfaßt, dieser wahlweise die Verbindung mit dem Tankanschluß T oder dem Pumpenanschluß P herstellt. Die parallel zur Verschieberichtung des Ventilkolbens 16 verlaufende Verbindungsleitung 40 mündet mit ihrem einen freien Ende in den Nutzanschluß A und mit ihrem anderen freien Ende in eine Stichleitung 56, die in jeder Verschiebestellung des Ventilkolbens 16 in die Ringausnehmung 54 mündet. Die angesprochene Stichleitung 56 ist nach außen hin von einer Abschlußkugel 58 in dichtender Weise verschlossen. Ebenso wie der Pumpenanschluß P ist auch der Tankanschluß T quer zur Längsrichtung des Ventilkolbens 16 angeordnet, wobei in die Tankleitung T eine Druckausgleichsleitung 60 mündet, die wiederum mit ihrem anderen freien Ende in einen Druckraum 62 mündet, der von dem Betätigungsteil 28 des Magnetankers 26 durchgriffen ist und der in diesem Bereich an den Ventilkolben 16 anstößt.

Der Tankanschluß T sowie der Pumpenanschluß P sind durch einen mittleren Ventilkolbenteil 64, der die Ringausnehmung 54 aufweist, fluidführend voneinander getrennt. Je nach dem Systemzustand des Ventils und mithin je nach Verschiebestellung des Ventilkolbens 16 und des mittleren Ventilkolbenteiles 64 ist eine fluidführende Verbindung zwischen dem Nutzanschluß A und dem Tankanschluß T oder dem Nutzanschluß A und dem Pumpenanschluß P gegeben. Für die dahingehende fluidführende Verbindung wird eine Überdeckung der Ringausnehmung 54 mit dem jeweiligen Anschluß P oder T herbeigeführt. Ansonsten münden die Anschlüsse P und T in eine ringförmige Verjüngung 66 innerhalb des Ventilkolbens 16, die durch den mittleren Ventilkolbenteil 64 voneinander getrennt sind.

In beiden Richtungen an die jeweilige Verjüngung 66 anschließend sind weitere Kolbenteile 68 vorhanden, die jeweils eine übliche Abdichtung aufweisen. Zum besseren Verständnis des erfindungsgemäßen Ventils wird dieses nunmehr anhand seiner Funktion näher erläutert.

Bei einer Auslenkung des Ventil- oder Regelkolbens 16 in positiver X-Richtung, d.h. zur Ringscheibe 42 hin, was über die Magnetkraft des Magnetsystems 20 erfolgt, wird über die als Ringspalt ausgebildete Drossel 38 zwischen Ventilgehäuse 10 und Ringscheibe 42 das vorhandene Fluidvolumen innerhalb des Dämpfungsraumes 36 von dort in Richtung des Nutzanschlusses A verdrängt. Dieser Verdrängungsvolumenstrom über den Ringspalt erzeugt einen örtlichen Druckaufbau, wobei sich auf die druckwirksame Fläche des Kolbens 16 eine Dämpfungskraft ermitteln läßt, die entgegen der auslenkenden Kraft des Ventilkolbens 16 gerichtet ist und so eine dämpfende Wirkung auf die gesamte Ventilachse ausübt. Beim etwaigen Zurückfahren des Ventilkolbens 16 in die entgegengesetzte negative X-Richtung, muß dieses Fluidvolumen in den sich nun vergrößernden Dämpfungsraum 36 wieder über den definierten Ringspalt als Drossel 38 zurückströmen, was wiederum eine Hemmung auf den Ventilkolben 16 ausübt. Aufgrund dieser Hemmung über die Drossel 38 ist mit geringem Aufwand auf fertigungstechnisch einfache und kostengünstige Weise ein Druckregelventil mit einer hohen Stabilität gegenüber Dauerschwingungen geschaffen, da über die Drossel 38 und den Dämpfungsraum 36 eine Hemmung für die Ventilkolbenbewegung entsteht. Da man auf diese Art und Weise Instabilitäten bei dem Ventil begegnen kann, sind Funktionsausfälle vermieden.

Der Dämpfungsraum 36 ist Bestandteil eines Zentralkanals, der sich entlang der Längsachse des Ventilgehäuses 10 erstreckt. Der Dämpfungsraum 36 ist auf seiner einen Seite durch die Kolbenteile 68 begrenzt und auf seiner anderen Seite durch die Drossel 38. Sowohl die Drossel 38 als auch der Dämpfungsraum 36 sind benachbart dem Nutzanschluß A am freien stirnseitigen Ende des Ventilgehäuses 10 angeordnet. Ferner mündet die Verbindungsleitung 40 parallel verlaufend zum Zentralkanal mit ihrem freien Ende am stirnseitigen Abschluß des Ventilgehäuses 10 ins Freie.
Auf diese Art und Weise ist ein besonders kompakter Aufbau für das Ventil erreicht und dieses kommt für seine Funktion mit nur einer Drosselstelle aus. Ferner erfolgt der Dämpfungsausgleich unmittelbar unter Einwirkung auf das stirnseitige freie Ende der unteren Kolbenteile 68. Der Dämpfungsraum 36 ist darüber hinaus charakterisiert, daß er bis auf die Drossel 36 in sich im wesentlichen geschlossen ist, insbesondere über die Dichteinrichtung der Kolbenteile 68 in Richtung der Verjüngung 66 mit dem Pumpenanschluß P.

## Patentansprüche

1. Ventil, insbesondere Druckregelventil, mit einem Ventilgehäuse (10), mit mindestens einem Pumpen (P)-, Nutz (A)- und Tankanschluß (T), wobei in dem Ventilgehäuse (10) ein von einem Magnetanker (26) ansteuerbarer Ventilkolben (16) geführt ist, wobei das Ventil mit einer hydraulischen Dämpfungseinrichtung (34) versehen ist, die einen Dämpfungsraum (36) aufweist, der über eine Drossel (38) mit Drosselstelle (44) fluidführend mit dem Nutzanschluß (A) verbunden ist und wobei über eine Verbindungsleitung (40) in Abhängigkeit von der Stellung des Ventilkolbens (16) wahlweise der Pumpen (P)- oder der Tankanschluß (T) mit dem Nutzanschluß (A) verbunden ist, **dadurch gekennzeichnet, daß** die Drosselstelle (44) zumindest teilweise aus einem Ringspalt gebildet ist, der zwischen einer Ringscheibe (42) und Teilen (46) des die Ringscheibe (42) umgebenden Ventilgehäuses (10) gebildet ist, daß die Ringscheibe (42) punktweise mit dem Ventilgehäuse (10) verbördelt ist, und daß an den Verbindungspunkten der Ringspalt unterbrochen ist ebenso wie durch die stirnseitige Anlage der Ringscheibe (42) an dem Inneren des Ventilgehäuses (10).

2. Ventil nach Anspruch 1, **dadurch gekennzeichnet, daß** der Ringspalt in einen Verbindungskanal (48) der Ringscheibe (42) mündet, die fluidführend mit dem Dämpfungsraum (36) in Verbindung steht.

3. Ventil nach Anspruch 1 oder 2, **dadurch gekennzeichnet, daß** die Verbindungsleitung (40) zumindest teilweise parallel zur Verfahrrichtung des Ventilkolbens (16) innerhalb des Ventilgehäuses (10) verläuft und daß über eine Ringausnehmung (54) im Ventilkolben (16) dieser wahlweise die Verbindung mit dem Tank (T) - oder dem Pumpenanschluß (P) herstellt.

4. Ventil nach einem der Ansprüche 1 bis 3, **dadurch gekennzeichnet, daß** der Tankanschluß (T) über eine Druckausgleichsleitung (60) im Ventilgehäuse (10) mit einem Druckraum (62) verbunden ist, der von einem Betätigungsteil (28) des Magnetankers (26) für den Ventilkolben (16) durchgriffen ist.

5. Ventil nach Anspruch 4, **dadurch gekennzeichnet, daß** entgegen der Magnetkraft des Magnetankers (26) ein Kraftspeicher (32) an dem Betätigungsteil (28) angreift, das sich ansonsten am Ventilgehäuse (10) abstützt.

6. Ventil nach einem der Ansprüche 1 bis 5, **dadurch gekennzeichnet, daß** es als Einschraubteil ausgebildet ist und daß zur Ansteuerung des Magnetankers (26) als Teil eines Proportionalmagneten (20) dieser mit dem Ventilgehäuse (10) verbunden ist.

## Claims

1. Valve, in particular a pressure regulation valve, with a valve housing (10), with at least one pump (P), utility (A), and tank connection (T), whereby a valve piston (16) controlled by a magnet anchor (26) is positioned in the valve housing (10), whereby the valve is provided with a hydraulic damping device (34) which has a damping chamber (36) which is connected by fluid conveyance to the utility connection (A) by means of a regulator (38) with a regulator position (44), and whereby either the pump (P) or the tank connection (T) is connected to the utility connection (A) by means of a connection line (40), dependent upon the position of the valve piston (16), **characterised in that** the regulator position (44) is at least partially formed by a circular fissure which is formed between a circular disc (42) and sections (46) of the valve housing (10) which surrounds the circular disc (42), that the circular disc (42) is bordered at points with the valve housing (10), and that the circular fissure is broken at the connection points and by the front-side attachment of the circular disc (42) onto the interior of the valve housing (10).

2. Valve in accordance with claim 1, **characterised in that** the circular fissure leads out into a connection channel (48) of the circular disc (42) which is in connection by fluid conveyance with the damping chamber (36).

3. Valve in accordance with claim 1 or 2, **characterised in that** the connection line (40) runs at least partially parallel to the operational direction of the valve piston (16) within the valve housing (10) and that by means of a circular recess (54) in the valve piston (16), this can create the connection either with the tank (T) or the pump connection (P).

4. Valve in accordance with any of the claims 1 to 3, **characterised in that** the tank connection (T) is connected by means of a pressure equalisation line (60) in the valve housing (10) to a pressure chamber (62), through which an activation section (28) of the magnet anchor (26) for the valve piston (16) passes.

5. Valve in accordance with claim 4, **characterised in that**, working in opposition to the magnetic force of the magnet anchor (26), there is a power storage unit (32) on the activation section (28) which is also supported on the valve housing (10).

6. Valve in accordance with any of the claims 1 to 5, **characterised in that** it is in the form of a screw-in section, and that this is connected to the valve housing (10) for the control of the magnet anchor (26) as a part of a proportional magnet (20).

## Revendications

1. Soupape, en particulier soupape de régulation de pression, comprenant une cage de soupape (10), avec au moins un raccord de pompe (P), un raccord utile (A) et un raccord de ravitaillement (T), un piston à soupape (16) activable par une armature d'aimant (26) étant guidé dans la cage de soupape (10), la soupape étant munie d'un dispositif amortisseur (34) hydraulique qui présente un espace amortisseur (36) qui est relié au raccord utile (A) de manière à conduire du fluide via un étranglement (38) avec position d'étranglement (44) et le raccord de pompe (P) ou le raccord de ravitaillement (T) étant au choix reliés au raccord utile (A) via une canalisation de jonction (40) en fonction de la position du piston à soupape (16), **caractérisée en ce que** la position d'étranglement (44) est formée au moins partiellement à partir d'une fente annulaire qui est formée entre un disque annulaire (42) et des parties (46) de la cage de soupape (10) entourant le disque annulaire (42), **en ce que** le disque annulaire (42) est assemblé en queue d'aronde par points avec la cage de soupape (10) et **en ce que** la fente annulaire est interrompue au niveau des points de jonction tout comme par la disposition sur la face du disque annulaire (42) à l'intérieur de la cage de soupape (10).

2. Soupape selon la revendication 1, **caractérisée en ce que** la fente annulaire débouche dans un canal de jonction (48) du disque annulaire (42) qui est en contact avec l'espace amortisseur (36) de manière à conduire du fluide.

3. Soupape selon la revendication 1 ou 2, **caractérisée en ce que** la canalisation de jonction (40) évolue au moins en partie parallèlement au sens de translation du piston à soupape (16) à l'intérieur de la cage de soupape (10) et **en ce que** via un évidement annulaire (54) dans le piston à soupape (16), ce dernier établit au choix la communication avec le raccord de ravitaillement (T) ou avec le raccord de pompe (P).

4. Soupape selon l'une quelconque des revendications 1 à 3, **caractérisée en ce que** le raccord de ravitaillement (T) est raccordé via une conduite de compensation de pression (60) dans la cage de soupape (10) à une chambre de pression (62) qui est traversée par une pièce d'actionnement (28) de l'armature d'aimant (26) pour le piston à soupape (16).

5. Soupape selon la revendication 4, **caractérisée en ce qu'**une accumulation d'énergie (32) intervient sur la pièce d'actionnement (28) à l'encontre de la force magnétique de l'armature d'aimant (26), ladite pièce d'actionnement s'appuyant autrement contre la cage de soupape (10).

6. Soupape selon l'une quelconque des revendications 1 à 5, **caractérisée en ce qu'**elle est réalisée sous forme de pièce filetée et **en ce qu'**en vue de l'activation de l'armature d'aimant (26) sous forme de partie d'un aimant proportionnel (20), celle-ci est reliée avec la cage de soupape (10).
